## Europäisches Patentamt

## European Patent Office

## Office européen des brevets

(19)

(11) Veröffentlichungsnummer: **0 086 953**
**B1**

(12)

# EUROPÄISCHE PATENTSCHRIFT

(45) Veröffentlichungstag der Patentschrift:
27.08.86

(21) Anmeldenummer: 83100426.2

(22) Anmeldetag: 19.01.83

(51) Int. Cl.⁴: **F 16 J 15/32**

(54) **Wellendichtung.**

(30) Priorität: 06.02.82 DE 3204193

(43) Veröffentlichungstag der Anmeldung:
31.08.83 Patentblatt 83/35

(45) Bekanntmachung des Hinweises auf die Patenterteilung:
27.08.86 Patentblatt 86/35

(84) Benannte Vertragsstaaten:
AT BE CH DE FR GB IT LI LU NL SE

(56) Entgegenhaltungen:
DE - C - 1 675 397
US - A - 4 192 517
US - A - 4 278 260

(73) Patentinhaber: **Firma Carl Freudenberg, Höhnerweg 4,
D-6940 Weinheim/Bergstrasse (DE)**

(72) Erfinder: **Hölzer, Helmut, Hegelstrasse 15,
D-6940 Weinheim (DE)**

(74) Vertreter: **Weissenfeld-Richters, Helga, Dr.,
Höhnerweg 2, D-6940 Weinheim/Bergstrasse (DE)**

ACTORUM AG

## Beschreibung

Die Erfindung betrifft eine Wellendichtung, bestehend aus einem Gehäuse mit einem ersten und einem zweiten Flansch, die eine nach innen geöffnete, ringförmige Nut begrenzen, sowie aus einem mit der Welle umlaufenden Dichtring aus einem polymeren Werkstoff, der längs einer Klemmfläche flüssigkeitsdicht und verdrehsicher, jedoch in axialer Richtung beweglich auf der Welle verankert ist und eine in die Nut eingreifende Dichtlippe aufweist, die elastisch vorgespannt an dem abzudichtenden Medium zugewandten Stirnfläche des zweiten Flansches anliegt.

Eine Wellendichtung dieser Art ist aus DE-C-1 675 397 bekannt. Die Anpressung der Dichtlippe an die Stirnfläche des zweiten Flansches ist massgeblich von der präzisen gegenseitigen Zuordnung beider Teile abhängig. Der Einbau einer solchen Wellendichtung ist deshalb mit grösserem Aufwand verbunden. Praxisüblichen Bedingungen wird eine solche Ausführung dennoch insofern nicht gerecht, weil in den meisten Fällen axiale Wellenverlagerungen in Kauf genommen werden müssen, die sich beispielsweise aus dem üblichen Lagerspiel ergeben.

Der Erfindung liegt die Aufgabe zugrunde, eine Wellendichtung zu zeigen, die weitgehend unabhängig von axialen und von radialen Wellenverlagerungen ein gutes Abdichtungsergebnis gewährleistet und die ohne das Erfordernis einer präzisen Justierung als einbaufertige Einheit montierbar ist.

Diese Aufgabe wird erfindungsgemäss bei einer Wellendichtung der eingangs genannten Art dadurch gelöst, dass der Dichtring im wesentlichen hohlkegelstumpfförmig ausgebildet ist und dass der erste Flansch des Gehäuses eine ringförmige Abstützfläche aufweist, die zwischen der Klemmfläche und der Dichtlippe an dem Dichtring anliegt und deren Durchmesser so mit der Gestalt des Dichtringes abgestimmt ist, dass letzterer im eingebauten Zustand elastisch deformiert wird.

Die vorgeschlagene Wellendichtung lässt sich ausserordentlich einfach und entsprechend kostengünstig herstellen. Sie besteht im einfachsten Falle aus zwei Teilen, die, unabhängig voneinander hergestellt und lose zusammengefügt, unmittelbar die verwendungsfähige Einheit ergeben. Für die Verwendung beider Einzelteile können demzufolge unter den zur Verfügung stehenden Fertigungsmethoden jeweils die rationellsten ausgesucht werden sowie die Werkstoffe, die der betriebsbedingten Beanspruchung in optimaler Weise genügen.

Das Gehäuse kann aus Stahlblech oder einem thermoplastischen Kunststoff bestehen, beispielsweise aus Polypropylen. Der Dichtring liegt mit seiner Dichtlippe nicht allein durch die Welle geführt an der Gegenlauffläche an, wie beispielsweise die Ausführung nach DE-C-1 675 397, sondern zwischen der Klemmfläche und der Dichtlippe ist eine weitere Abstützfläche vorhanden, die neben der elastischen Andrückung der Dichtlippe an die Stirnfläche des zweiten Flansches eine sekundäre Führung bedingt. Die Zuordnung der Dichtlippe zu dem Gehäuse ist aus diesem Grunde ausserordentlich stabil und zwar auch beim Auftreten von axialen und/oder radialen Wellenverlagerungen. Diese werden massgeblich durch eine axiale Verschiebung des Dichtringes auf der Welle bzw. die radiale Verlagerung der Dichtlippe ausgeglichen. Die Verankerung auf der Welle muss demzufolge so gewählt werden, dass der Dichtring zwar verdrehsicher und flüssigkeitsdicht gehalten wird, jedoch in axialer Richtung verschiebbar. Durch eine massliche Abstimmung des kleinsten Durchmessers des Dichtringes mit dem Aussendurchmesser der Welle lässt sich dieses Erfordernis ohne Schwierigkeiten erfüllen. Ein Abstand zwischen dem grössten Durchmesser des Dichtringes und dem Nutgrund im eingebauten Zustand ermöglicht die radiale Verlagerung der Dichtlippe.

Die vorgeschlagene Gestaltung des Dichtringes ermöglicht die Verwendung von bisher als zuwenig elastisch angesehenen Werkstoffen zu seiner Herstellung, beispielsweise von Polytetrafluoräthylen oder Polypropylen. Die stark verminderte Wandstärke bei Verwendung solcher Werkstoffe bedingt ein ausserordentlich geringes Gewicht, wodurch Resonanzschwingungen mit der abgedichteten Welle weitgehend ausgeschlossen sind. Die Verwendung der elastomeren Werkstoffe, die bisher auf dem einschlägigen Gebiet hauptsächlich zur Anwendung gekommen sind, ist selbstverständlich ebenfalls möglich.

Der hohlkegelstumpfförmige Dichtring lässt sich in Einzelfertigung herstellen, beispielsweise unter Verwendung eines Spritzpressverfahrens. In vielen Fällen ist eine Herstellung durch mechanische Abarbeitung kostengünstiger, beispielsweise durch Abstechen hohlkegelstumpfförmiger Ringscheiben von einem Rohr mit Hilfe eines Drehautomaten.

Nach einer vorteilhaften Ausgestaltung ist es vorgesehen, dass das Profil der Abstützfläche an das Profil des Dichtringes angepasst ist und in axialer Richtung gleitkufenähnlich endet. Eine mechanische Beschädigung des Dichtringes während des Einbaus oder beim Auftreten von radialen und/oder axialen Wellenbewegungen unter Betriebsbedingungen wird hierdurch verhindert.

Die Abstützfläche kann durch die Oberfläche eines ersten Gleitringes aus einem polymeren Werkstoff gebildet werden. Der Werkstoff wird zweckmässigerweise so ausgewählt, dass sich ein günstiger Reibungskoeffizient in bezug auf den Werkstoff des Dichtringes ergibt, wobei die Benetzung durch das abzudichtende Medium Berücksichtigung finden muss.

Bei gewissen Werkstoffen können sich Schwierigkeiten ergeben, eine zuverlässige Verankerung am Gehäuse zu erzielen. Es hat sich unter diesem Gesichtspunkt als vorteilhaft bewährt, wenn der erste Gleitring in einer nach innen geöffneten Nut des ersten Flansches gelagert ist.

Zweckmässigerweise ist auch das Profil der Stirnfläche des zweiten Flansches an das Profil des Dichtringes im eingebauten Zustand angepasst. Es kann in axialer Richtung ebenfalls gleitkufenähnlich enden, um eine mechanische Beschädigung des Dichtringes beim Auftreten von radialen und/oder axialen Wellenbewegungen zu verhindern. Auch die Stirnfläche des zweiten Flansches kann durch die Oberfläche eines zweiten Gleitringes aus einem polymeren Werkstoff gebildet werden. Dieser kann ohne besondere Vorkehrungen in die Nut des Gehäuses eingelegt, jedoch auch mit dem zweiten Flansch verklebt oder verklammert werden, um eine Leckage in der Zwischenzone zu verhindern. Werkstoffmässig ist zu beachten, dass gegenüber dem Dichtring ein möglichst niedriger Reibungskoeffizient angestrebt wird, dass jedoch Relativbewegungen gegenüber dem Gehäuse nach Möglichkeit vermieden werden sollen.

Der erste und/oder der zweite Gleitring können bei Verwendung eines Dichtringes aus Gummi, aus Polytetrafluoräthylen bestehen, bzw. bei Verwendung eines Dichtringes aus Polytetrafluoräthylen, aus Gummi. Andere Werkstoffpaarungen sind ohne weiteres denkbar. Das Profil der Gleitringe ist bevorzugt kreisförmig.

Nach einer vorteilhaften Ausgestaltung ist es vorgesehen, dass das Verhältnis jeweils aus dem axialen Abstand der Klemmfläche und der Dichtlippe von der Abstützfläche 0,5 bis 1,5 beträgt. Wird der genannte Bereich nach unten oder oben überschritten, dann kann eine unzureichende Anpressung der Dichtlippe gegen die Stirnfläche des zweiten Flansches die Folge sein.

In der in der Anlage beigefügten Zeichnung sind einige beispielhafte Ausführungen der vorgeschlagenen Wellendichtung in halb geschnittener Darstellung wiedergegeben. Es zeigen:

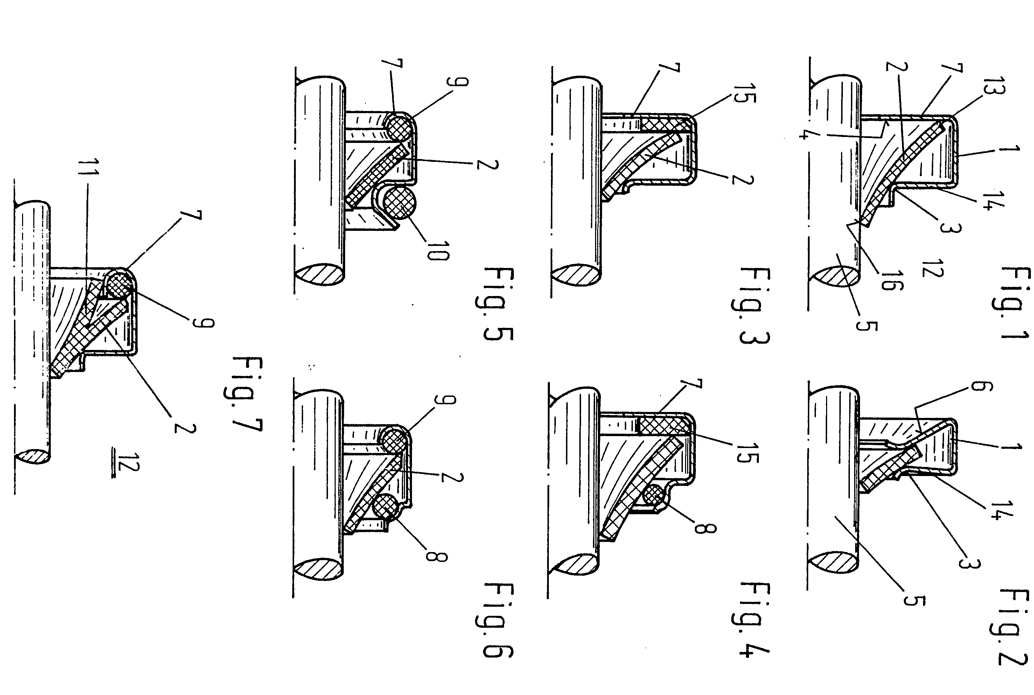

Fig. 1 eine Ausführung, bei der in das Gehäuse aus Stahlblech das hohlkegelstumpfförmige Dichtelement 2 mit in Richtung des abgedichteten Raumes 12 weisendem, kleineren Durchmesser eingefügt ist. Der kleinere Durchmesser ruht verdrehsicher und flüssigkeitsdicht, jedoch in axialer Richtung verschiebbar auf der abgedichteten Welle 5. Die Dichtlippe 13 liegt an der in Richtung des abgedichteten Mediums weisenden Stirnfläche 4 des zweiten Flansches 7 an. Die erforderliche elastische Anpressung resultiert aus der Deformierung des Dichtringes 2 durch die etwa in der Mitte anliegende Abstützfläche 3 des ersten Flansches 14 des Gehäuses.

Fig. 2 zeigt eine Ausführung, bei der das Profil der Abstützfläche 3 des ersten Flansches 14 sowie die Stirnfläche des zweiten Flansches 6 an das Profil des Dichtringes angepasst sind. Durch diese Ausführung werden mechanische Beschädigungen des Dichtringes bei Wellenverlagerungen verhindert.

Fig. 3 zeigt eine Ausführung, bei der die Stirnfläche des zweiten Flansches 7 mit einer reibungsvermindernden Beschichtung 15 versehen ist. Die Beschichtung 15 besteht aus Gummi und sie ist mit dem Gehäuse 1 flüssigkeitsdicht verbunden. Der dazugehörige Dichtring 2 besteht aus Polytetrafluoräthylen.

Fig. 4 zeigt eine Ausführung ähnlich Fig. 3, bei der die Abstützfläche durch einen Ring mit kreisförmigem Profil aus Gummi gebildet ist.

Fig. 5 zeigt eine Ausführung, bei der die Beschichtung der Stirnfläche des zweiten Flansches 7 aus einem Gummiring mit kreisförmigem Profil besteht. Der Dichtring 2 besteht auch in diesem Fall aus Polytetrafluoräthylen. Im rechten Teil der geschnittenen Darstellung ist eine Nut abgebildet, in die ein O-Ring 10 eingelegt ist zur statischen Abdichtung des Gehäuses 1 gegenüber dem aufnehmenden Maschinenelement.

Fig. 6 zeigt eine Ausführung, bei der sowohl die Abstützfläche als auch die Stirnfläche des Bodenflansches aus Ringen mit kreisförmigem Profil bestehen. Beide Ringe 8, 9 bestehen aus Polytetrafluoräthylen, der Dichtring 2 aus Gummi.

Fig. 7 zeigt eine Ausführung ähnlich Fig. 5, mit der Abweichung, dass der Dichtring 2 im Bereich des Flansches 7 eine umlaufende Nut aufweist sowie einen dadurch gebildeten ringförmigen Vorsprung 11, der auf der Aussenseite des Flansches 7 anliegt. Das Eindringen von Staub und anderen Verunreinigungen in den abgedichteten Raum 12 wird hierdurch zusätzlich erschwert.

## Patentansprüche

1. Wellendichtung, bestehend aus einem Gehäuse (1) mit einem ersten (14) und einem zweiten Flansch (7), die eine nach innen geöffnete, ringförmige Nut begrenzen, sowie aus einem mit der Welle umlaufenden Dichtring (2) aus einem polymeren Werkstoff, der längs einer Klemmfläche flüssigkeitsdicht und verdrehsicher, jedoch in axialer Richtung beweglich auf der Welle verankert ist und eine in die Nut eingreifende Dichtlippe (13) aufweist, die elastisch vorgespannt an der dem abzudichtenden Medium zugewandten Stirnfläche des zweiten Flansches anliegt, dadurch gekennzeichnet, dass der Dichtring (2) im wesentlichen hohlkegelstumpfförmig ausgebildet ist und dass der erste Flansch (14) des Gehäuses (1) eine ringförmige Abstützfläche (3) aufweist, die zwischen der Klemmfläche (16) und der Dichtlippe (13) an dem Dichtring anliegt und die so mit der Gestalt des Dichtringes (2) abgestimmt ist, dass letztere elastisch deformiert wird.

2. Wellendichtung nach Anspruch 1, dadurch gekennzeichnet, dass das Profil der Abstützfläche (3) in eingebautem Zustand an das Profil des Dichtringes (2) angepasst ist und in axialer Richtung gleitkufenähnlich endet.

3. Wellendichtung nach Anspruch 1 bis 2, dadurch gekennzeichnet, dass die Abstützfläche (3) durch die Oberfläche eines ersten Gleitringes (8) aus einem polymeren Werkstoff gebildet wird.

4. Wellendichtung nach Anspruch 3, dadurch gekennzeichnet, dass der erste Gleitring (8) in einer nach innen geöffneten Nut des ersten Flansches (14) gelagert ist.

5. Wellendichtung nach Anspruch 1 bis 4, dadurch gekennzeichnet, dass das Profil der Stirnfläche (4) des zweiten Flansches (7) an das Profil des Dichtringes (2) angepasst ist und in axialer Richtung gleitkufenähnlich endet.

6. Wellendichtung nach Anspruch 5, dadurch gekennzeichnet, dass die Stirnfläche (4) durch die Oberfläche eines zweiten Gleitringes (9) aus einem polymeren Werkstoff gebildet wird.

7. Wellendichtung nach Anspruch 6, dadurch gekennzeichnet, dass der zweite Gleitring in der Nut des Gehäuses gelagert ist.

8. Wellendichtung nach Anspruch 1 bis 7, dadurch gekennzeichnet, dass der erste und/oder der zweite Gleitring (8, 9) bei Verwendung eines Dichtringes (2) aus Gummi, aus Polytetrafluoräthylen besteht.

9. Wellendichtung nach Anspruch 1 bis 7, dadurch gekennzeichnet, dass der erste und/oder der zweite Gleitring (8, 9) bei Verwendung eines Dichtringes (2) aus Polytetrafluoräthylen, aus Gummi besteht.

10. Wellendichtung nach Anspruch 1 bis 9, dadurch gekennzeichnet, dass der erste und/oder der zweite Gleitring ein kreisförmig begrenztes Profil aufweisen.

11. Wellendichtung nach Anspruch 1 bis 10, dadurch gekennzeichnet, dass das Verhältnis aus dem axialen Abstand jeweils der Klemmfläche (16) und der Dichtlippe (13) von der Abstützfläche (3) 0,5 bis 1,5 beträgt.

**Claims**

1. A shaft seal comprising a housing (1) having a first flange (14) and a second flange (17) which define an inwardly open, annular groove, and also comprising a seal ring (2) rotating with the shaft and made of polymeric material, which seal ring (2) is secured on the shaft along a clamping face such that is fluid-tight and cannot twist but can move in the axial direction and has a seal lip (13) which engages into the groove and sits in an elastically prestressed state against the end face of the second flange which faces towards the medium to be sealed, characterized in that the seal ring (21) is made essentially in in the shape of a hollow truncated cone, and that the first flange (14) of the housing (1) has an annular support face (3) which sits against the seal ring between the clamping face (16) and the seal lip (13) and which is matched to the form of the seal ring (2) such that the latter is elastically deformed.

2. A shaft seal according to claim 1, characterized in that the profile of the supporting face (3) is adapted in the installed condition to the profile of the seal ring (2) and terminates in the axial direction like a landing skid.

3. A shaft seal according to claim 1 or 2, characterized in that the support face (3) is formed by the surface of a first sliding ring (8) made of a polymer material.

4. A shaft seal according to claim 3, characterized in that the first sliding ring (8) is mounted in an inwardly open groove of the first flange (14).

5. A shaft seal according to any of claims 1 to 4, characterized in that the profile of the end face (4) of the second flange (7) is adapted to the profile of the seal ring (2) and terminates in the axial direction like a landing skid.

6. A shaft seal according to claim 5, characterized in that the end face (4) is formed by the surface of a second sliding ring (9) made of a polymer material.

7. A shaft seal according to claim 6, characterized in that the second sliding ring is mounted in the groove of the housing.

8. A shaft seal according to any of claims 1 to 7, characterized in that a seal ring (2) made of rubber is used and the first and/or second sliding ring (8, 9) is made of polytetrafluoroethylene.

9. A shaft seal according to any of claims 1 to 7, characterized in that a seal ring (2) made of polytetrafluoroethylene is used and the first and/or second sliding ring (8, 9) is made of rubber.

10. A shaft seal according to any of claims 1 to 9, characterized in that the first and/or second sliding ring has a section defined in the shape of a circle.

11. A shaft seal according to any of claims 1 to 10, characterized in that the ratio of the axial distances of the clamping face (16) and the seal lip (13) respectively from the support face (3) is 0.5:1 to 1.5:1.

**Revendications**

1. Joint d'arbre constitué d'un corps (1) avec une première bride (14) et une seconde bride (7) qui délimitent une rainure annulaire ouverte vers l'intérieur, ainsi qu'une bague d'étanchéité (2) tournant avec l'arbre et en matériau polymère, qui est fixée sur l'arbre suivant une surface de serrage de manière étanche aux liquides et empêchant toute rotation, tout en permettant cependant un déplacement dans le sens axial et qui présente une lèvre d'étanchéité (13) s'engageant dans la rainure, qui est élastiquement précontrainte et qui appuie sur la surface frontale de la seconde bride tournée vers le fluide à contenir, caractérisé en ce que la bague d'étanchéité (2) présente essentiellement la forme d'un tronc de cône creux et en ce que la première bride (14) du corps (1) présente une surface d'appui annulaire (3) qui appuie entre la surface de serrage (16) et la lèvre d'étanchéité (13) sur la bague d'étanchéité et qui est adaptée au profil de la bague d'étanchéité (2), de manière à ce que cette dernière soit élastiquement déformée.

2. Joint d'arbre selon la revendication 1, caractérisé en ce que le profil de la surface d'appui (3) est adapté au profil de la bague d'étanchéité (2) à l'état de montage et se termine en direction axiale en forme de patin de glissement.

3. Joint d'arbre selon les revendications 1 et 2, caractérisé en ce que la surface d'appui (3) est constituée par la surface d'une première bague de glissement (8) en matériau polymère.

4. Joint d'arbre selon la revendication 3, caractérisé en ce que la première bague de glissement (8) est disposée dans une rainure de la première bride (14) ouverte vers l'intérieur.

5. Joint d'arbre selon les revendications 1 à 4, caractérisé en ce que le profil de la surface frontale (4) de la seconde bride (7) est adapté au profil de la bague d'étanchéité (2) et se termine en direction axiale en forme de patin de glissement.

6. Joint d'arbre selon la revendication 5, caractérisé en ce que la surface frontale (4) est constituée par la surface d'une seconde bague de glissement (9) en matériau polymère.

7. Joint d'arbre selon la revendication 6, caractérisé en ce que la seconde bague de glissement vient se placer dans la rainure du corps.

8. Joint d'arbre selon les revendications 1 à 7, caractérisé en ce que la première et/ou la seconde bague de glissement (8, 9) est réalisée en polytétrafluoréthylène si on utilise une bague d'étanchéité (2) en caoutchouc.

9. Joint d'arbre selon les revendications 1 à 7, caractérisé en ce que la première et/ou la seconde bague de glissement (8, 9) est réalisée en caoutchouc si on utilise une bague d'étanchéité (2) en polytétrafluoréthylène.

10. Joint d'arbre selon les revendication 1 à 9, caractérisé en ce que la première et/ou la seconde bague de glissement présente un profil limité de forme circulaire.

11. Joint d'arbre selon les revendications 1 à 10, caractérisé en ce que le rapport de la distance axiale de la surface de serrage (16) et de la lèvre d'étanchéité (13) par rapport à la surface d'appui (3) est égal à 0,5 à 1,5.

Fig. 1 Fig. 2 Fig. 3 Fig. 4 Fig. 5 Fig. 6 Fig. 7